# EUROPEAN PATENT APPLICATION

(11) **EP 4 404 139 A1**
(43) Date of publication of application: **24.07.2024**
(21) Application number: 23151987.7
(22) Date of filing: 17.01.2023
(51) Int. Cl.: G06T 7/30

(54) **METHOD AND SYSTEM FOR ALIGNING 3D REPRESENTATIONS**

(71) Applicant: 3Shape A/S, 1060 Copenhagen K (DK)
(72) Inventor: RASMUSSEN, Johannes Tophøj, 1060 Copenhagen K (DK); SØNDERGAARD, Peter, 1060 Copenhagen K (DK); ØRKILD, Thomas, 1060 Copenhagen K (DK)
(74) Representative: Guardian IP Consulting I/S

(57) **Abstract**

The present disclosure relates to a computer-implemented method of aligning digital three-dimensional (3D) representations of an upper and lower jaw, the method comprising the steps of: generating a first digital 3D representation of the upper jaw and a second digital 3D representation of the lower jaw; inputting the first and second digital 3D representations to a first neural network configured to output a transformation for each 3D representation; applying the transformation to each of the first and second 3D representations, whereby transformed 3D representations are generated; inputting the transformed 3D representations to a second neural network configured to align the transformed 3D representations; and fine tuning the alignment such that the first and second 3D representations of the jaws are arranged in occlusion.

## Description

### Technical field

The present disclosure relates to a computer-implemented method and system for aligning two digital three-dimensional representations. In particular, the disclosed method and system further relates to determining the natural bite of a patient from a pair of digital 3D representations of the patient's jaws.

### Background

Digital dentistry has enabled the ability to acquire a digital impression of a patient's teeth using an intraoral scanner. A typical scan procedure includes several steps, such as scanning the patient's teeth in the upper and lower jaw. Typically, the upper and lower jaw are scanned in separate steps, whereby a 3D surface scan of each jaw is obtained. In a separate step, the patient's bite is typically determined by scanning e.g. the left and right sides of the patient's bite, i.e. when the teeth in the upper and lower jaw are in occlusion. During this step, the two surface scans are aligned in a process known as bite alignment.

Bite alignment is the process of matching 3D surface scans of the upper and lower jaw of a patient with each other in the position that corresponds to the patient's natural bite. Currently, bite alignment is done as a separate scanning step using an intraoral scanner or by manually placing gypsum models in occlusion in an articulator in a dental lab scanner.

It is of interest to develop improved bite alignment procedures or to develop methods that ideally enable the manual bite alignment steps to be entirely skipped, thereby saving time for the patient, dentist, or dental technician.

### Summary

The present disclosure addresses the above-mentioned challenges by providing a computer-implemented method of aligning digital three-dimensional (3D) representations of an upper and lower jaw, wherein the method comprises the steps of: obtaining a first digital 3D representation of the lower jaw and a second digital 3D representation of the upper jaw; inputting the first and second digital 3D representations to a first neural network configured to output a transformation for each 3D representation; applying the transformation to each of the first and second 3D representations, whereby transformed 3D representations are generated; and inputting the transformed 3D representations to a second neural network configured to align the transformed 3D representations.

The terms `lower jaw' and 'upper jaw' may on some occasions be used herein to refer to a digital 3D representation of the lower and upper jaw, respectively. It should be clear from the context, where the term 'jaw' refers to the physical jaw or a digital representation of said jaw.

A first step of the presently disclosed method may be to obtain a digital 3D representation of a patient's jaw. A patient's jaw may be understood herein to include the patient's dentition, such as the patient's teeth and/or gingiva. In a typical scanning procedure, the patient's lower and upper jaw are scanned separately in their own step of the scanning procedure. Therefore, the first step of the disclosed method may be to obtain a first digital 3D representation of the patient's lower or upper jaw. Then, in a subsequent step, a second digital 3D representation of the patient's other jaw (upper or lower) may be obtained. Typically, the lower jaw of the patient is scanned first. Therefore, in preferred embodiments, a first step of the method is to obtain a first digital 3D representation of the lower jaw and a second digital 3D representation of the upper jaw. It should be understood that the disclosed method is not limited to any particular order of obtaining the two digital 3D representations of the patient's jaw. Thus, the two jaws may be scanned in any order, and consequently the first and second digital 3D representations may be generated or obtained in any order.

A next step of the disclosed method may be to input the first and second digital 3D representations to a first neural network configured to output a transformation for each 3D representation. Alternatively, the first neural network may be trained to output a standardized 3D representation based on the input 3D representation. The first and second digital 3D representations may be individually input to the first neural network, i.e. the representations may be input to the neural network in succession. The transformation may include any of translation(s) and/or rotation(s) of a given 3D representation to bring it to a standardized position. The trained first neural network may be configured to output a first transformation associated with the first 3D representation, and a second transformation associated with the second 3D representation. Alternatively, the trained first neural network may be configured to output a reference position of a given 3D representation, which has been input to the trained neural network. The reference position may be understood as a standardized position and orientation, also referred to as a jaw pose.

A next step of the disclosed method may be to apply the transformation to each of the first and second 3D representations, whereby transformed 3D representations are generated. In general, each of the first and second 3D representations may have their own coordinate system. Since the first and second representations may be obtained separately there may initially be no relation between the two. Furthermore, each 3D representation may be rotated completely arbitrary. A purpose of applying the transformation is to bring each 3D representation to a standardized position and orientation, e.g. in a standardized coordinate system. The standardized position and orientation may also be referred to herein as the jaw pose. The two representations may be placed in a common coordinate system and placed within said coordinate system according to each of their standardized positions. Preferably, the two representations are placed in the common coordinate system such that they face each other; this may be based on the aforementioned transformations and/or landmarks on the teeth. Using a common coordinate system is advantageous since it provides a direct relationship between the first and second 3D representation.

A next step of the disclosed method may be to input the standardized / transformed 3D representations to a second neural network configured to align the transformed 3D representations. The second neural network may be configured to accept both transformed representations as input in one step. Preferably, the output of the first neural network is used as the input to the second neural network. The second neural network has preferably been trained to align the first and second 3D representations of the jaws to each other.

In preferred embodiments, the computer-implemented method comprises the steps of:
- generating a first digital 3D representation of the upper jaw and a second digital 3D representation of the lower jaw;
- inputting the first and second digital 3D representations to a first neural network configured to output a transformation for each 3D representation;
- applying the transformation to each of the first and second 3D representations, whereby transformed 3D representations are generated;
- inputting the transformed 3D representations to a second neural network configured to align the transformed 3D representations; and
- fine tuning the alignment such that the first and second 3D representations of the jaws are arranged in occlusion.

The present disclosure further relates to a data processing system comprising one or more processors configured to perform the steps of the method disclosed herein. The present disclosure further relates to a computer program product comprising instructions which, when the program is executed by a computer, cause the computer to carry out the steps of the method disclosed herein. The present disclosure further relates to a computer-readable storage medium comprising instructions which, when executed by a computer, cause the computer to carry out the steps of the method disclosed herein. The present disclosure further relates to a computer-readable data carrier having stored thereon said computer program product.

The present disclosure further relates to a computer-implemented method of training a machine learning model, such as a neural network, for aligning two digital three-dimensional (3D) representations corresponding to the upper and lower jaw, wherein the neural network has been trained based on a training data set comprising a plurality of pairs of digital 3D representations of jaws, wherein each pair of jaws comprises an upper and a lower jaw aligned in occlusion, wherein the plurality of pairs of aligned jaws constitutes the ground truth for the training of the neural network. In some embodiments, the training data set further comprises the variance of the patient's natural bite, e.g. in terms of relative movement(s) of the two jaws in a pair of jaws. This may improve the trained neural network e.g. in terms of accuracy.

Accordingly, the disclosed method provides a faster and more simple procedure of determining the natural bite of a patient, since it enables an automatic determination of the bite as opposed to a separate step in the scan procedure. The disclosed method may further provide a more accurate way of determining the occlusion of two jaws and/or the natural bite of a patient.

### Brief description of the drawings

Fig. 1 shows a digital 3D representation of a jaw, such as the teeth in the upper or the lower jaw of a patient. This example shows the representation before it has been transformed to its jaw pose / standardized coordinate system.
Fig. 2 shows the same digital 3D representation of a jaw as shown in fig 1; however, in this example, the representation has been transformed to its standardized coordinate system.
Fig. 3 shows two digital 3D representations of jaws (upper and lower jaw), wherein the two transformed representations are placed in a common coordinate system.
Fig. 4 shows two digital 3D representations of jaws (upper and lower jaw), wherein the two transformed representations are aligned according to the natural bite of the patient.
Fig. 5 shows a schematic of a computer.
Fig. 6 shows a 3D scanner system according to the present disclosure.

### Detailed description

### Segmentation

A segmentation process may enable the identification of distinct dental objects such as individual teeth and/or surrounding gingiva in a digital 3D representation representing the patient's jaw/dentition. The output of the segmentation process may include identification of individual teeth.

To identify individual teeth within the digital 3D representation, a segmentation process may be applied to the 3D representation. By segmenting the digital 3D representation, at least a first segmented tooth representation and a second segmented tooth representation may be obtained. The first and second segmented tooth representations may represent neighboring teeth in the same jaw of the patient's dentition. The segmentation process may be performed in different ways, for example based on identification of individual facets or group of facets belonging to a tooth representation. It thus allows for identifying objects such as individual teeth and/or surrounding gingiva in the digital 3D representation representing the patient's dentition. The output of the segmentation process may be individual tooth representations which are usually displayed in the form of solid tooth objects, tooth meshes or tooth point clouds.

Segmentation of the digital 3D representation may be done in several ways. According to an example, segmentation may comprise the use of surface curvatures to identify boundaries of tooth representations. A minimum principal curvature and a mean principal curvature can be used to measure surface property quantitatively. Then, a cutting plane to separate gingiva and teeth part may be produced, based on Principal Component Analysis algorithm (PCA). A curvature threshold value, for example a constant value, can be selected to distinguish tooth boundary regions from the rest of surface.

In another example, segmenting the digital 3D representation may comprise the use of a harmonic field to identify tooth boundaries. On the digital 3D representation, a harmonic field is a scalar attached to each mesh vertex satisfying the condition: ΔΦ=0, where Δ is Laplacian operator, subject to Dirichlet boundary constraint conditions. The above equation may be solved, for example using least squares method, to calculate the harmonic field. The segmented tooth representations can then be extracted by selecting optimal isolines connecting datapoints with same value, as tooth representation boundaries.

In yet another example, segmenting the digital 3D representation may comprise the use of a machine learning model, such as a neural network. In particular, the digital 3D representation may be converted into a series of 2D digital images taken from different perspectives. The machine learning model may be applied to the series of 2D digital images. For each 2D digital image, a classification can be performed to distinguish between different teeth classes and gingiva. After classification of each 2D digital image, back-projection onto the digital 3D representation may be performed. This method for segmenting the digital 3D representation may be advantageous as the segmentation machine learning model utilizes a series of 2D digital images, resulting in an overall fast and accurate classification.

### Dental anatomy

In general, a full set of teeth in a human includes 16 teeth in each jaw. The teeth may be grouped into four main types of teeth in humans: molars, pre-molars, canines, and incisors. Using this grouping, a human with a full set of teeth has six molars, four pre-molars, two canines, and four incisors in each jaw. The teeth are typically symmetrically arranged in the jaw according to their type, such that each side of the jaw comprises three molars, two pre-molars, one canine, and two incisors in each jaw. The teeth may be numbered according to a dental notation system, such as the Universal Numbering System. Other examples of dental notation systems include the FDI World Dental Federation notation (also referred to as "FDI notation" or "ISO 3950 notation"), and the Palmer notation.

### Jaw pose

A jaw pose may be understood as a standardized local coordinate system associated with a given 3D representation of a jaw. The local coordinate system may comprise an origin and three mutually-orthogonal axes intersecting at the origin. The standardized local coordinate system may be defined as outlined in the following. For a given 3D representation of a jaw (e.g. upper or lower jaw), the jaw will in general comprise one or more teeth or edentulous ridges in the jaw. The following example assumes that the jaw comprises a plurality of pairs of teeth. A first step in defining the standardized local coordinate system of a given jaw may be to consider pairs of teeth in the jaw. As an example, a pair of teeth may comprise one tooth of a given type, e.g. a molar, wherein the tooth is located in one side of the jaw, and then another tooth of the same type located in the opposite side of the jaw. A specific example of a pair of teeth in the lower jaw is `37' and `47' or `36' and `46', wherein the numbers refer to the ISO 3950 notation. As an example, for all the pairs of teeth, a line connecting the two teeth in a given pair may be determined. A midpoint of each line may also be determined. Then, a line may be fitted through the midpoints to determine a first axis of the local coordinate system. This axis may in general approximately coincide with a midline of the tongue of the patient. A second axis may be determined by computing the average direction of the lines associated with each pair of teeth. The second axis is preferably orthogonal to the first axis. A third axis of the local coordinate system may be determined by taking the cross product between the two other directions. In order to determine the origin of the local coordinate system of a given jaw, the position of a given pair of teeth may be utilized. As an example, the origin may be determined based on the location of the canines in the jaw. The origin and three axes / directions of the local coordinate system may collectively be referred to as the jaw pose for a given 3D representation of a jaw.

### Training of the first neural network

The first neural network may be trained to output a standardized 3D representation of a jaw and/or a transformation for transforming a given 3D representation to a standardized 3D representation. A standardized 3D representation of a jaw may be understood as a 3D representation which is described using a standardized local coordinate system. The first neural network may be trained based on a first training data set. The first training data set may include a plurality of digital 3D representations of jaws, such as upper and/or lower jaws. The digital 3D representations may be in the form of point clouds or polygon meshes, such as 3D meshes composed of points and facets, e.g. forming a triangular mesh. In some cases, if a digital 3D representation is provided as a 3D mesh, it may be transformed into a corresponding point cloud. A point cloud may be understood as a plurality of points in 3D space.

The 3D representations may be provided as point clouds. Prior to training the first neural network, the position of the points in the digital 3D representations may be standardized. Thus, all points of a given 3D representation may be placed around an average position of the points in the point cloud. The average point may be determined by a 'center-of-mass' approach, wherein the average position is subtracted from all the other points. In this way, the points are distributed around an origin of a local coordinate system, wherein the origin is coincident with the center of mass of the point cloud.

Doing training of the first neural network, the 3D representation of the jaw may be translated and rotated to a random position and orientation. Then, the network is trained to transform the 3D representation back to the original position and orientation, and provide said original position and orientation as the output. The first training data set may comprise ground truth annotations. The ground truth annotations for the first training data may be automatically calculated and/or assigned to the training data. In some cases, this requires one or more other computer algorithms to have been run before training of the first neural network. These algorithms may be utilized to prepare the first training data.

In some embodiments, one or more algorithms are executed when generating the first training data set. As an example, a tooth segmentation algorithm may be executed, wherein said algorithm is configured to segment the 3D representation to enable distinction between tooth tissue and other tissues. The tooth segmentation algorithm may be a machine-learning based algorithm. The tooth segmentation algorithm may be a computer-implemented method comprising the step of automatically classifying facets and/or points in the 3D representation into tooth tissue or non-tooth tissue. The segmentation algorithm may further be configured to uniquely identify each tooth in the 3D representation. A label may be assigned to each facet and/or to each point in the 3D representation. The label may be a unique number and/or letter which is in accordance with a dental notation system. The label may be automatically assigned by executing the tooth segmentation algorithm. After the labels are assigned to the facets / points, the labels enable the possibility of identifying and grouping all facets / points with the same label. As an example, this approach may enable identifying a unique/particular tooth by finding or grouping all facets / points with a label associated with said tooth. Thus, the tooth segmentation algorithm may be executed and utilized to automatically and uniquely identify the teeth in the 3D representation. Accordingly, during preparation of the first training data set, a segmentation algorithm may be executed, wherein said algorithm is configured to uniquely identify each tooth in the 3D representations, wherein said identification includes assigning a unique number or letter to each point and/or facet in the 3D representation.

In some embodiments, the tooth segmentation algorithm is only executed when generating the first training data set, such that the trained first neural network is trained to output the jaw pose without relying on the tooth segmentation algorithm. In some embodiments, the tooth segmentation algorithm is executed prior to the step of aligning the first and second 3D representations or prior to the step of determining the jaw pose. In that case, the output from the tooth segmentation algorithm may be used as input to the first or second neural network to improve the accuracy of the jaw pose or the accuracy of the alignment.

As another example, a tooth pose algorithm may be executed, wherein said algorithm is configured to determine the tooth pose of one or more teeth in the 3D representation, preferably of all the teeth in a given 3D representation of the patient's jaw. The tooth pose may be understood as a local coordinate system associated with a single tooth, wherein the tooth has a certain position and orientation (tooth pose) within said local coordinate system. The local coordinate system may comprise a tooth specific origin and three mutually-orthogonal axes intersecting at the origin. The tooth pose algorithm may be a computer-implemented method comprising the step of automatically determining the tooth pose of one or more teeth in the 3D representation. A suitable tooth pose algorithm is fully described in European application 22185244.5, which is hereby incorporated by reference in its entirety.

As yet another example, a landmark classification algorithm may be executed, wherein said algorithm is configured to automatically determine a plurality of landmarks on teeth located in a 3D representation of a jaw. In some embodiments, the landmark classification algorithm is executed prior to the step of aligning the jaws, i.e. prior to the step of inputting the transformed first and second 3D representations to the second neural network. The determined landmarks may be used as input to the second neural network in order to improve the accuracy of the alignment performed by the second neural network.

As yet another example, an arch fitting algorithm may be executed, wherein said algorithm is configured to fit a model of components representing e.g. landmarks or tooth poses of a full dentition, to the upper and lower jaws. This facilitates estimating the position of any missing teeth. The fit may also provide a rough, initial placement of the jaws, either individually or relative to each other. These results may improve the training data for the first and/or second neural network. It may further improve the accuracy of the first and/or second neural network.

Accordingly, the first training data set may be annotated by executing one or more computer algorithms, wherein the annotations may include: tissue classification (tooth / non-tooth), unique tooth identification, tooth landmarks, arch fitting, etc.

### Training of the second neural network

The second neural network may be trained to align the first and second 3D representations such that the upper and lower jaw are aligned according to the natural bite of the patient. Aligning / alignment may in this context be understood as adjusting the position and/or orientation of any of the first and/or second 3D representation. In other words, the second neural network is preferably trained to align 3D representations of the upper and lower jaws, wherein the 3D representations are obtained from the same patient.

The second neural network may have been trained on the basis of a second training data set. The second training data set may comprise a plurality of pairs of digital 3D representations of jaws, wherein each pair of jaws comprises an upper and a lower jaw aligned in occlusion according to the natural bite of a given patient. The plurality of pairs of aligned jaws may constitute the ground truth for the training of the second neural network. The second training data set may comprise real data, i.e. 3D representations generated based on scanning human patients. Thus, the second training data may comprise intraoral scans of jaws in natural occlusion. During training, one or more of the jaws in a pair of aligned jaws may be translated and/or rotated such that the position and orientation is randomized. Then, the second neural network is trained to output the transformation that brings the jaw back to the original position and orientation. The training may be performed by providing the network with the ground truth (the pair of jaws aligned in occlusion) and the randomized pairs (i.e. wherein one of the jaws is moved outside occlusion to a random position and/or orientation). Thus, the network may be given input pairs, wherein the objective is to align the jaws in accordance with the ground truth. By training the network on thousands of pairs of jaws together with the ground truth, the network will be trained to align any given pair of jaws, i.e. determine the suitable transformation that aligns the pair of jaws according to the natural bite.

The training of the second neural network for alignment of the upper and lower jaw may be an iterative process and may be repeated until the second neural network is no longer able to improve its output or until a certain desired accuracy is achieved. The output from the second neural network may be iteratively refined over a number of iterations, whereby the difference between the output and the ground truth is minimized over each iteration. The number of iterations required for training of the second neural network may be more than 10000 iterations, or more than 100000 iterations, or more than 200000 iterations.

Existing scan workflows typically include at least three steps: a first step typically includes scanning a first jaw, such as the lower jaw, of a patient. A next step typically includes scanning the opposite jaw, e.g. the upper jaw, of the patient. In a third step, the patient's bite is scanned, typically from both sides, i.e. left and right bite. Thus, the second training data set may be generated by scanning a plurality of patients in such a manner, i.e. including the bite scan procedure. Therefore, the training data may include information on the patient's natural bite. The second neural network is preferably able to perform the alignment / transformation regardless of the training data being annotated in terms of underbite/overbite. However, in some cases the second training data may be annotated with this information (underbite, overbite, etc.) to improve the accuracy of the alignment performed by the second neural network. Thus, in some embodiments, the second training data set is annotated, wherein the annotations comprise information selected from the group of: overbite, underbite, wear, type of malocclusion (Class I, Class II, Class III), and/or combinations thereof. In some embodiments, the trained second neural network is able to classify a bite into overbite or underbite.

In some embodiments, the second training data set includes the variance of the patient's natural bite. This may be achieved by generating training data, wherein patient specific motion of the jaws is recorded, e.g. in each side of the jaw, during the bite scan step (third step explained above). Patient specific motion, as well as systems and methods for recording said motion, is further described in EP 2 908 767 B1 by the same applicant, which is incorporated herein by reference in its entirety.

Current methods typically determine a static bite, i.e. a single bite from the patient in each side. A disadvantage hereof is that this may be somewhat inaccurate due to e.g. movement of the jaws relative to each other between the bite scans in each side, or due to a deformation of the jaws, since the jaws are somewhat flexible. Additionally, it is of interest to determine not only a single (typical) bite from the patient, but instead a variance of the patient's bite, which can be relevant for many types of treatment or diagnostic support. Before the emergence of digital dentistry, a patient's bite was typically recorded in an analog way using occlusal paper. In this approach, patients are asked to tap their teeth two to four times onto the occlusal paper.

Thus, to improve the presently disclosed method, the preparation of the second training data may include a step of recording the patient specific motion, e.g. using an intraoral scanner, and then extracting from these recording(s) where the teeth make contact. From each of these contacts it may be determined where the jaws should meet in the opposite side of the mouth, assuming contact in both sides of the mouth simultaneously. Further, based on this, an average contact position, optionally including the points on the teeth where contact has occurred, may be determined. These contact points may further provide a map of which 3D surface points on the teeth define the bite.

In addition, or as an alternative, to recording the patient specific motion, the second training data may include a plurality of determined static bites in each side of the mouth, as opposed to determining a single bite (in each side), which is typically done in the prior art. Accordingly, the variance of the patient's natural bite may be determined from a series of measured static bites in each side of the patient's jaw.

Thus, the second training data set may comprise the movement of the upper and lower jaw relative to each other within a pair of jaws. The training data set may further comprise contact points between the upper and lower jaw, when arranged in occlusion, and/or an average contact position. The training data set may further comprise the variance of the patient's natural bite. The second training data set may further, or alternatively, comprise a plurality of determined bite configurations (i.e. jaws arranged in occlusion) for each pair of jaws forming part of the training data set.

### Bite configurations

The following paragraph outlines a way to generate a training data set for the second neural network. In general, bite configurations are typically recorded using an intraoral 3D scanner. The dentist will ask the patient to bite his or her upper jaw and lower jaw together, and while the patient bites together in a first configuration, the dentist will perform a scan of the patient's teeth by means of the intraoral scanner to acquire a first 3D representation of the patient's bite. Then the dentist will ask the patient to bite his or her upper jaw and lower jaw together again, and while the patient bites together in a second configuration, the dentist will perform a scanning of the patient's teeth by means of the intraoral scanner to acquire a second 3D representation of the patient's bite. If more bite configurations are desired or required for determining the occlusal contact movement of the jaws relative to each other, the dentist will ask the patient to bite together a third, fourth, fifth etc. time and perform a scan for each bite. This outlined procedure may be utilized to prepare a training data set for the second neural network. In some embodiments, the training data set includes multiple of such bite configurations of the same patient. Furthermore, the variance between the different bite configurations of a given patient may be determined and form part of the training data set for the second neural network.

Determining occlusal contact movement may comprise a consecutive sequence of at least two 3D representations of bite configurations of the patient's jaws in respective occlusions. By taking such a sequence of bite configurations in a consecutive sequence it is possible to obtain true motion directly without any estimation or interpolation between the bite configurations.

The following provides an example of a method for recording patient specific motion, e.g. for generating a training data set for the second neural network disclosed herein. The method for generating the training data set may comprise the steps of: obtaining a 3D representation of the patient's upper jaw; obtaining a 3D representation of the patient's lower jaw; and obtaining at least a first 3D representation of a first bite configuration of the patient's jaws in a first occlusion and a second 3D representation of a second bite configuration of the patient's jaws in a second occlusion different from the first occlusion.

The method for generating the second training data set may further comprise the steps of digitally determining an occlusal contact movement of the patient's jaws relative to each other based on the at least first 3D representation, the second 3D representation and contact between the patient's upper jaw and lower jaw; whereby digitally determining the occlusal contact movement of the patient's jaws relative to each other comprises: interpolating the movement between the measured bite configurations, detecting overlapping areas of the teeth of the 3D representation of the patient's upper jaw and the 3D representation of the patient's lower jaw during interpolation, and moving the 3D representation of the patient's upper jaw and the 3D representation of the patient's lower jaw apart until no overlapping areas are detected.

In some embodiments, digitally determining the occlusal contact movement comprises a consecutive sequence of at least two 3D representations of bite configurations of the patient's jaws in respective occlusions. The method for generating the second training data set may further comprise obtaining the consecutive sequence of at least two 3D representations of bite configurations of the patient's jaws in respective occlusions using an intraoral scanner. Said method may further comprise that the 3D representations of bite configurations are recorded as a consecutive sequence of frames.

### Network architecture

The network architecture may be similar for the first and second neural networks. The first and/or the second neural network may be a point cloud based neural network architecture, i.e. a network architecture suitable for accepting one or more point clouds as the input. An example of such a network architecture is a PointNet neural network (as described in "PointNet: Deep Learning on Point Sets for 3D Classification and Segmentation", Charles R. Qi, Hao Su, Kaichun Mo, Leonidas J. Guibas). Such a neural network is invariant to the order of the points inputted. Alternatively, PointNet++ or PointNet-like network architectures can be used for the purpose of jaw pose determination and/or for aligning the jaws. As yet another alternative, the trained neural network may process 2-dimensional data wherein the 2-dimensional data may be obtained by converting 3-dimensional point clouds to 2-dimensional data, e.g. by so-called mesh-flattening algorithms or by rendering.

In preferred embodiments, the first and second digital 3D representations are point clouds comprising a plurality of points in 3D space. Preferably, the first and second 3D representations are individually input to the first neural network. Thus, the first neural network may be based on a network architecture capable of receiving a 3D representation in the form of a point cloud. The transformed / standardized first and second 3D representations may be collectively input to the second neural network; thus, this network is preferably configured to accept two point clouds as the input.

### Fine alignment

In preferred embodiments of the disclosed method, the method includes a final step of fine tuning the alignment of the first and second 3D representation of the jaws. Neural networks are not always good at handling physical constraints. In some cases, the alignment performed by the neural network causes the 3D representation of the jaws to intersect each other. Therefore, the fine alignment may be based on a geometric method, which ensures that the jaws are placed in occlusion, such that they only slightly touch each other at several places, without intersecting each other. In other words, the geometric method may be configured to ensure that any part of the first 3D representation is not within any part of the second 3D representation. The geometric method may define a metric specifying a number of contact points between the first and the second 3D representations, wherein the fine tuning is performed until the number of contact points reaches a maximum, without the first and second 3D representations intersecting each other.

### 3D scanner system

The presently disclosed method(s) may be carried out, fully or partly, by a 3D scanner system for generating a digital 3D representation of a dental object, such as a jaw and/or the patient's teeth within said jaw. The 3D scanner system may comprise an intraoral scanner for acquiring images inside the oral cavity of the patient. In preferred embodiments, an intraoral scanner is used to generate a first digital 3D representation of a first jaw and subsequently to generate a second digital 3D representation of a second jaw, opposite the first jaw. The intraoral scanner may be based on any suitable scanning principle, such as focus scanning, triangulation, stereo vision, confocal scanning, or other scanning principles.

In some embodiments, the intraoral scanner is based on mechanical confocal scanning, wherein an optical element, such as a lens, is configured to mechanically move back and forth to scan a volume during scanning, while projected light is spatially filtered in a detector plane. In some embodiments, the intraoral scanner is based on chromatic confocal scanning, wherein a volume is scanned by illuminating light through a highly chromatic material and changing the scanning wavelength, while projected light is spatially filtered in the detector plane.

In some embodiments, the intraoral scanner is based on a focus scanning principle, such as depth-from-focus. In such embodiments, the scanner comprises an optical element, such as a focus lens, which is configured to move back and forth during scanning to change the focus of the scanner, whereby the depth can be estimated based on a focus measure. A focus scanner is further described in EP 2 442 720 B1 by the same applicant, which is hereby incorporated herein by reference. In some embodiments, the intraoral scanner is based on a depth-from-defocus scanning principle, wherein an optical property, such as an aperture, is changed between the acquisition of two images, whereby depth can be estimated by determining the degree of defocus between the two images.

In some embodiments, the intraoral scanner is based on triangulation, wherein at least one camera and a projector unit are positioned such that they form a triangle with respect to a point on the scanned surface. As an example, a projector and a camera may be utilized to determine points in 3D space based on triangulation. Alternatively, the intraoral scanner may comprise two or more cameras viewing the scene or scanned object from two different directions, wherein the cameras are configured to acquire a set of images, wherein a correspondence problem is solved based on triangulation. The correspondence problem generally refers to the problem of ascertaining which parts of one image correspond to which parts of another image. Specifically, the projector unit may be configured to project a plurality of projector rays, which are projected onto a surface of the dental object. In particular, solving the correspondence problem may include the steps of determining image features in the images within a set of images, and further associate said image features with a specific projector ray. Subsequently, the depth of each projector ray may be computed, whereby a 3D representation of the scanned object may be generated.

### Detailed description of the drawings

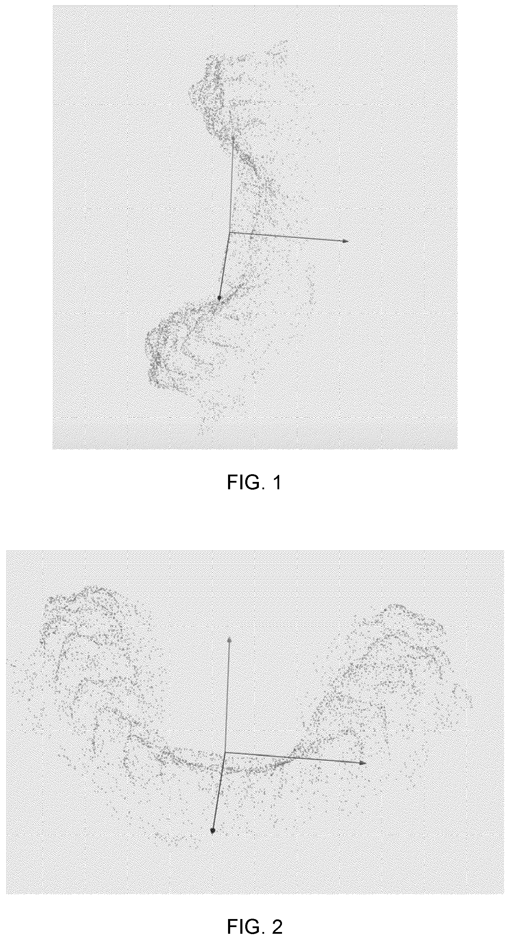

Fig. 1 shows a digital 3D representation of a jaw, wherein the 3D representation is a point cloud. The figure further shows a coordinate system. When a 3D representation has been generated, e.g. using an intraoral scanner, it may in general have some arbitrary orientation with respect to a given coordinate system. Thus, in preferred embodiments of the disclosed method, a step is included wherein the 3D representation is transformed to a standardized coordinate system having a jaw-specific origin. The transformed 3D representation may be referred to herein as a transformed 3D representation, a standardized 3D representation, or a 3D representation positioned according to its jaw pose. Such a transformed 3D representation is shown in figure 2.

Fig. 2 shows a digital 3D representation of a jaw, wherein the 3D representation is a point cloud. The figure shows the same 3D representation as shown in figure 1; however, in this example, the 3D representation has been transformed (rotated and/or translated) such that the representation is brought in its jaw pose. In other words, the 3D representation is standardized, such that it may be described by a standardized local coordinate system having a jaw-specific origin. An advantage of including a step of transforming the first and second 3D representation of the upper and lower jaws is that the two jaws have a well-defined origin and orientation, which enables a better starting point for aligning the two jaws in occlusion.

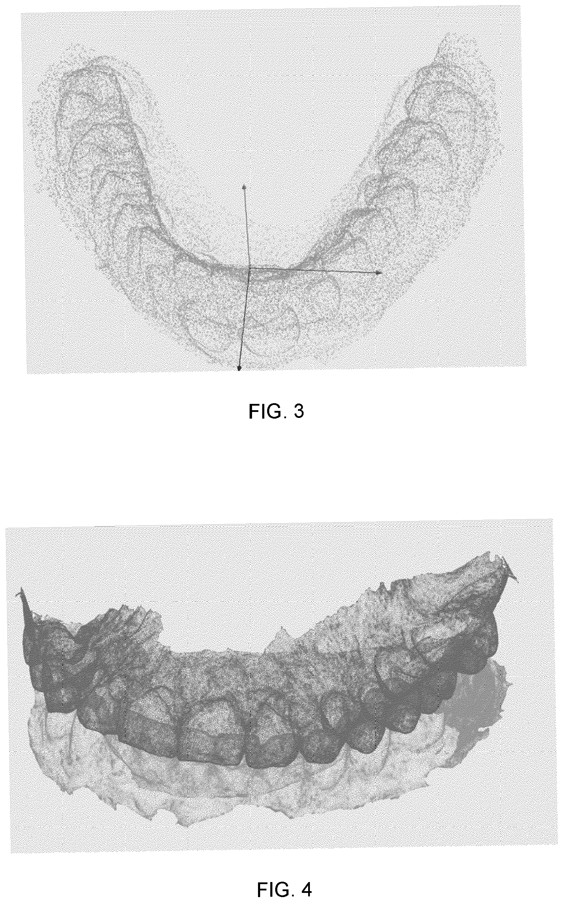

Fig. 3 shows two digital 3D representations, wherein a first 3D representation corresponds to e.g. an upper jaw of a patient (dark grey), and a second 3D representation corresponds to the opposite jaw, e.g. the lower jaw of a patient (light grey). In this figure, the two representations are shown in their 'jaw pose' i.e. in their standardized local coordinate system with a jaw-specific origin. The two representations are not yet aligned in this figure; they are merely shown in the same coordinate system.

Fig. 4 shows the two digital 3D representations of fig. 3, wherein the two representations have been aligned, such that the jaws are in occlusion according to the natural bite of the patient. The first representation corresponding to the upper jaw is shown using points in dark grey, and the second representation corresponding to the lower jaw is shown using points in light grey. The alignment may be automatically performed by a trained neural network as disclosed herein, wherein the neural network has been trained on the basis of a plurality of pairs of jaws aligned in occlusion. An advantage of automatically performing the alignment based on two 3D surface scans is that the bite scan, which is typically performed in a separate step, can be entirely avoided when utilizing the presently disclosed method.

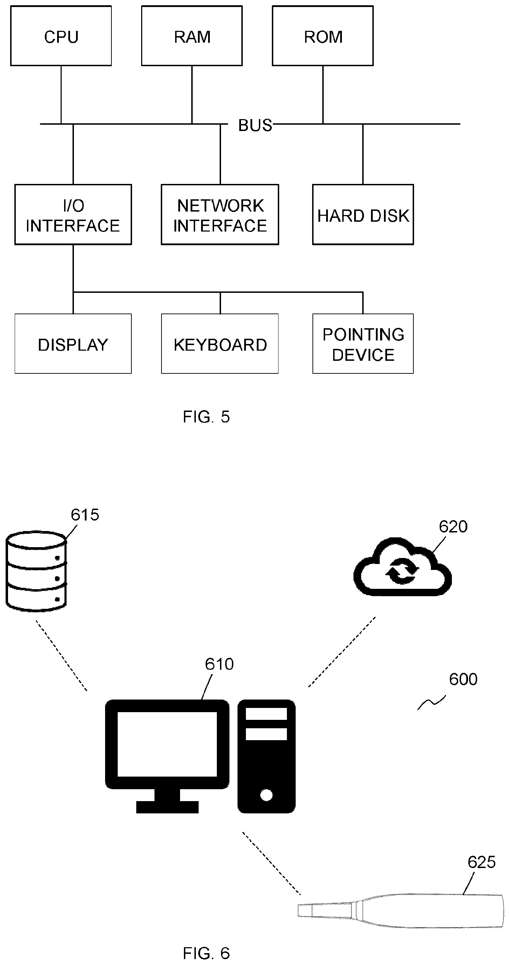

Fig. 5 shows a schematic of a computer. The computer may comprise one or more processors such as a central processing unit (CPU), which is configured to read and execute instructions stored in a computer memory, which may take the form of volatile memory such as random-access memory (RAM). The computer memory stores instructions for execution by the processor and data used by those instructions. For example, the instructions may relate to the computer-implemented methods disclosed herein, such as the alignment of two digital three-dimensional (3D) representations of an upper and lower jaw. The computer may further comprise non-volatile storage, e.g. in the form of a hard disk. The computer may further comprise an I/O interface to which other devices may be connected. Such devices may include display(s), keyboard(s), and pointing device(s) e.g. a mouse. The display may be configured to display a 2D rendition of the digital 3D representation(s). A user may interact with the computer via a keyboard and/or a pointing device. A network interface allows the computer to be connected to an appropriate computer network in order to receive and transmit data from and to other computing devices. The processor, computer memory (RAM/ROM), hard disk, I/O interface, and network interface may be connected together by a bus.

Fig. 6 shows a 3D scanner system 600 which may comprise a computer 610 configured to carry out any of the computer-implemented steps disclosed herein. The computer may comprise a wired or a wireless interface to a server 615, a cloud server 620 and/or an intraoral scanner 625. The intraoral scanner 625 may be capable of recording scan data comprising geometry and/or texture data of a patient's dentition. The intraoral scanner 625 may be equipped with various modules such as a fluorescence module and/or an infrared module and thereby capable of capturing information relevant for diagnosing dental conditions such as caries, tooth cracks, gingivitis, or plaque.

The 3D scanner system 600 may comprise a data processing device configured to carry out the method according to one or more embodiments of the disclosure. The data processing device may be a part of the computer 610, the server 615 or the cloud server 620. A non-transitory computer-readable storage medium may be comprised in the 3D scanner system 600. The non-transitory computer-readable storage medium may carry instructions which, when executed by a computer, cause the computer to carry out the method according to one or more embodiments of the disclosure. A computer program product may be embodied in the non-transitory computer-readable storage medium. The computer program product may comprise instructions which, when executed by a computer, cause the computer to perform the method according to any of the embodiments disclosed herein.

### Examples

In the following, an example of how the disclosed method may be carried out is outlined. A first step of the method may be to acquire surface scans of the upper and lower jaw of a patient. This step may be performed by scanning the upper and lower jaw using an intraoral scanner. The surface scans may also be referred to herein as 3D representations. Each of the 3D representations may then be input to a first neural network, which is configured to output a transformed 3D representation and/or a transformation for translating/rotating the 3D representation into a standardized position and orientation, also referred to herein as the jaw pose. Fig. 2 shows a digital 3D representation of a jaw, which has been output from the first neural network, i.e. this representation has been transformed to its jaw pose position. Alternatively, the first neural network may be configured to output a transformation, i.e. how the representation should be rotated and displaced in 3D space in order to bring the representation to its standardized jaw pose position as illustrated in fig. 2. The transformation and/or the transformed 3D representation may be represented as a vector. Thus, after the first neural network has been applied to a 3D representation of the upper and lower jaw, respectively, the transformed 3D representations may be input to the second neural network. In some embodiments, the two vectors output by the first neural network, wherein each vector is associated with a given jaw (upper or lower) in a pair of jaws, are concatenated together before being input to the second neural network. Thus, the output of the first neural network may be used as the input to the second neural network. The trained second neural network is able to automatically align the two representations associated with the upper and lower jaw in a given pair of jaws. The alignment corresponds to adjusting the position and/or orientation of the two digitally represented jaws until the two jaws are in occlusion corresponding to the natural bite of the patient. In some embodiments, the two 3D representations are provided in the form of point clouds. Further, the two point clouds associated with the upper and lower jaw may be combined into one point cloud. The combined point cloud may then be input to the second neural network for aligning the two digital jaws. In some embodiments, a final step of the method includes fine tuning the alignment performed by the second neural network. The final step may include applying a geometric method to finely adjust the alignment to a certain precision or accuracy. The geometric method preferably ensures that the two digitally represented jaws are not intersecting.

### Further details of the invention

1. A computer-implemented method of aligning digital three-dimensional (3D) representations of an upper and lower jaw, the method comprising the steps of:
   a. generating a first digital 3D representation of the upper jaw and a second digital 3D representation of the lower jaw;
   b. inputting the first and second digital 3D representations to a first neural network configured to output a transformation for each 3D representation;
   c. applying the transformation to each of the first and second 3D representations, whereby transformed 3D representations are generated;
   d. inputting the transformed 3D representations to a second neural network configured to align the transformed 3D representations; and
   e. fine tuning the alignment such that the first and second 3D representations of the jaws are arranged in occlusion.
2. The method according to item 1, wherein the transformation include: translation, rotation, and/or combinations thereof.
3. The method according to any of the preceding items, wherein the transformed 3D representations are described by a standardized local coordinate system having a predefined origin and orientation.
4. The method according to any of the preceding items, wherein the first and second digital 3D representations are individually input to the first neural network.
5. The method according to any of the preceding items, wherein the first and/or the second neural network is a point cloud based neural network architecture, i.e. a network architecture suitable for accepting one or more point clouds as input.
6. The method according to any of the preceding items, wherein the first and second digital 3D representations are point clouds comprising a plurality of points in 3D space.
7. The method according to any of the preceding items, wherein the first neural network has been trained based on a first training data set, wherein the first training data set comprises a plurality of digital 3D representations of jaws, such as upper and/or lower jaws.
8. The method according to item 7, wherein the first training data set is annotated, wherein the annotation comprises the jaw pose for each of the digital 3D representations of the jaws.
9. The method according to any of the items 7-8, wherein one or more ground truth annotations related to the first training data set is automatically generated by executing one or more computer algorithms applied to the first training data set.
10. The method according to any of the items 7-9, wherein the first training data set is labelled with ground truth annotations by applying one or more computer algorithms to the first training data set.
11. The method according to any of the items 7-10, wherein during preparation of the first training data set, a segmentation algorithm is executed, wherein said algorithm is trained and/or configured to uniquely identify each tooth in the 3D representations, wherein said identification includes assigning a unique number or letter to each point and/or facet in the representation.
12. The method according to any of the preceding items, wherein the second neural network has been trained based on a second training data set, wherein the second training data set comprises a plurality of pairs of digital 3D representations of jaws, wherein each pair of jaws comprises an upper and a lower jaw aligned in occlusion, wherein the plurality of pairs of aligned jaws constitutes the ground truth for the training of the second neural network.
13. The method according to item 12, wherein the second training data set is annotated.
14. The method according to any of the items 12-13, wherein the second training data set comprises the movement of the upper and lower jaw relative to each other within a pair of jaws.
15. The method according to any of the items 12-14, wherein the second training data set comprises the variance of the patient's natural bite.
16. The method according to any of the items 12-15, wherein the second training data set comprises a plurality of determined bites (i.e. jaws arranged in occlusion) for each pair of jaws forming part of the training data set.
17. The method according to item 13, wherein the annotations comprise information selected from the group of: overbite, underbite, open bite, wear, type of malocclusion (Class I, Class II, Class III).
18. The method according to any of the items 13-17, wherein the annotations include a unique number of each tooth in the jaw(s), which allows a unique identification of each tooth, wherein the unique number is in correspondence with a given dental notation system.
19. The method according to any of the preceding items, wherein the trained second neural network is configured to determine the type of malocclusion and/or configured to classify a given pair of jaws as being in normal occlusion, overbite, or underbite.
20. The method according to any of the preceding items, wherein during training of the second neural network, the position and/or rotation of one or more of the jaws in each pair of jaws is randomized, wherein the second neural network applies one or more transformations to align the jaws in each pair.
21. The method according to any of the preceding items, wherein the first and second digital 3D representations are combined to form one point cloud, wherein each point in the point cloud is assigned a binary value indicating whether the point belongs to the upper jaw or the lower jaw.
22. The method according to any of the preceding items, wherein the method further comprises the step of executing a segmentation algorithm, wherein said segmentation algorithm is trained and/or configured to automatically identify teeth in the jaw(s), wherein said identification includes assigning a unique number and/or letter to each point or facet in the representation(s).
23. The method according to item 22, wherein the segmentation algorithm is executed prior to the step of aligning the jaws, wherein the unique number and/or letter is used as input to the first and/or second neural network.
24. The method according to any of the preceding items, wherein a landmark classification algorithm is executed prior to the step of aligning the jaws, wherein the landmark classification algorithm is trained and/or configured to automatically determine a plurality of landmarks on teeth located in the jaw(s), wherein the determined landmarks are used as input to the second neural network in order to improve accuracy of the alignment.
25. The method according to any of the preceding items, wherein fine tuning the alignment is performed by defining a metric specifying a number of contact points between the first and the second 3D representations, and wherein the fine tuning is performed until this metric reaches a maximum.
26. The method according to item 25, wherein a geometric method ensures that the first and second 3D representations are not intersecting, i.e. such that any part of the first 3D representation is not within any part of the second 3D representation.
27. A data processing system comprising one or more processors configured to perform the steps of the method according to any of the items 1-26.
28. A computer program product comprising instructions which, when the program is executed by a computer, cause the computer to carry out the steps of the method according to any of the items 1-26.
29. A computer-readable storage medium comprising instructions which, when executed by a computer, cause the computer to carry out the steps of the method according to any of the items 1-26.
30. A computer-readable data carrier having stored thereon the computer program product of item 28.
31. Use of the method according to any of the items 1-26 for aligning digital three-dimensional (3D) representations of an upper and lower jaw of a patient in order to determine the occlusion of the upper and lower jaws and/or to determine the natural bite of the patient.
32. A computer-implemented method of training a neural network for aligning two digital three-dimensional (3D) representations corresponding to the upper and lower jaw, wherein the neural network has been trained based on a training data set comprising a plurality of pairs of digital 3D representations of jaws, wherein each pair of jaws comprises an upper and a lower jaw aligned in occlusion, wherein the plurality of pairs of aligned jaws constitutes the ground truth for the training of the neural network.

Although some embodiments have been described and shown in detail, the disclosure is not restricted to such details, but may also be embodied in other ways within the scope of the subject matter defined in the following claims. In particular, it is to be understood that other embodiments may be utilized, and structural and functional modifications may be made without departing from the scope of the present disclosure. Furthermore, the skilled person would find it apparent that unless an embodiment is specifically presented only as an alternative, different disclosed embodiments may be combined to achieve a specific implementation and such specific implementation is within the scope of the disclosure.

A claim may refer to any of the preceding claims, and "any" is understood to mean "any one or more" of the preceding claims.

It should be emphasized that the term "comprises/ comprising/ including" when used in this specification is taken to specify the presence of stated features, integers, operations, steps or components but does not preclude the presence or addition of one or more other features, integers, steps, components or groups thereof.

In claims enumerating several means, several of these means can be embodied by one and the same item of hardware. The mere fact that certain measures are recited in mutually different dependent claims or described in different embodiments does not indicate that a combination of these measures cannot be used to advantage.

## Claims

1. A computer-implemented method of aligning digital three-dimensional (3D) representations of an upper and lower jaw, the method comprising the steps of:
a. generating a first digital 3D representation of the upper jaw and a second digital 3D representation of the lower jaw;
b. inputting the first and second digital 3D representations to a first neural network configured to output a transformation for each 3D representation;
c. applying the transformation to each of the first and second 3D representations, whereby transformed 3D representations are generated;
d. inputting the transformed 3D representations to a second neural network configured to align the transformed 3D representations; and
e. fine tuning the alignment such that the first and second 3D representations of the jaws are arranged in occlusion.

2. The method according to claim 1, wherein the first and second digital 3D representations are individually input to the first neural network.

3. The method according to any of the preceding claims, wherein the first and/or the second neural network is a point cloud based neural network architecture.

4. The method according to any of the preceding claims, wherein the first neural network has been trained based on a first training data set, wherein the first training data set comprises a plurality of digital 3D representations of jaws, such as upper and/or lower jaws.

5. The method according to claim 4, wherein the first training data set is annotated, wherein the annotation comprises the jaw pose for each of the digital 3D representations of the jaws.

6. The method according to any of the claims 4-5, wherein one or more ground truth annotations related to the first training data set is automatically generated by executing one or more computer algorithms applied to the first training data set.

7. The method according to any of the claims 4-6Error! Reference source not found., wherein during preparation of the first training data set, a segmentation algorithm is executed, wherein said algorithm is trained and/or configured to uniquely identify each tooth in the 3D representations, wherein said identification includes assigning a unique number or letter to each point and/or facet in the representation.

8. The method according to any of the preceding claims, wherein the second neural network has been trained based on a second training data set, wherein the second training data set comprises a plurality of pairs of digital 3D representations of jaws, wherein each pair of jaws comprises an upper and a lower jaw aligned in occlusion, wherein the plurality of pairs of aligned jaws constitutes the ground truth for the training of the second neural network.

9. The method according to claim 8, wherein the second training data set comprises movement(s) of the upper and lower jaw relative to each other within a pair of jaws.

10. The method according to any of the claims 8-9, wherein the second training data set comprises the variance of the patient's natural bite.

11. The method according to any of the claims 8-10, wherein the second training data set comprises a plurality of determined bites (i.e. jaws arranged in occlusion) for each pair of jaws forming part of the training data set.

12. The method according to any of the claims 8-11, wherein the second training data set is annotated, wherein the annotations comprise information selected from the group of: overbite, underbite, open bite, wear, type of malocclusion (Class I, Class II, Class III).

13. The method according to any of the claims 8-12, wherein the second training data set is annotated, wherein the annotations include a unique number of each tooth in the jaw(s), which allows a unique identification of each tooth, wherein the unique number is in correspondence with a given dental notation system.

14. The method according to any of the preceding claims, wherein the trained second neural network is configured to determine the type of malocclusion and/or configured to classify a given pair of jaws as being in normal occlusion, overbite, or underbite.

15. The method according to any of the preceding claims, wherein the method further comprises the step of executing a segmentation algorithm, wherein said segmentation algorithm is trained and/or configured to automatically identify teeth in the jaw(s), wherein said identification includes assigning a unique number and/or letter to each point or facet in the representation(s), wherein the segmentation algorithm is executed prior to the step of aligning the jaws, wherein the unique number and/or letter is used as input to the first and/or second neural network.
